# FASCICULE DE BREVET EUROPEEN

(11) **EP 0 500 401 B1**
(45) Date de publication et mention de la délivrance du brevet: **12.08.1998**
(21) Numéro de dépôt: 92400076.3
(22) Date de dépôt: 13.01.1992
(51) Int. Cl.: A01N 53/00, A01N 25/04

(54) **Microémulsions de pyréthroides et leur utilisation**
Pyrethroid-Mikroemulsionen und ihre Verwendung
Microemulsions of pyrethroids and use thereof

(30) Priorité: 22.02.1991 FR 9102374
(43) Date de publication de la demande: 26.08.1992
(73) Titulaire: RHODIA CHIMIE, 92408 Courbevoie Cédex (FR)
(72) Inventeur: Derian, Paul-Joel, F-92330 Sceaux (FR); Guerin, Gilles, F-95600 Eaubonne (FR)
(74) Mandataire: Seugnet, Jean Louis

(56) Documents cités:
- EP-A- 0 062 181
- EP-A- 0 107 009
- EP-A- 0 160 182
- EP-A- 0 432 062
- FR-A- 2 634 974

## Description

La présente invention concerne de nouvelles microémulsions stables, ainsi que leur utilisation pour la lutte contre les insectes, en particulier dans le traitement des cultures et la protection du bois.

La plupart des systèmes tensio-actifs connus dans l'art antérieur comprennent un sel d'acide alkylarylsulfonique.

Ainsi, la demande EP-A-160182 décrit des microémulsions comprenant du dodécylbenzènesulfonate de calcium.

Les microémulsions à base d'eau mentionnées dans la demande EP-A-62181, comprennent généralement un sel de métal ou d'ammonium d'acide alkylarylsulfonique.

La demande EP-A-432062 est relatif à des microémulsions concentrées pouvant former des émulsions stables après dilution. Parmi les tensio-actifs anioniques rentrant dans ces microémulsions, le dodécylbenzène sulfonate de sodium ou de calcium est cité.

La présente invention a trait à des microémulsions stables de pyréthroïde, caractérisées en ce qu'elles comportent :
- de 0,1 % à 95% en poids par poids d'au moins un pyréthroïde sous forme liquide,
- de 2 % à 90% en poids par poids d'un système tensio-actif comprenant :
   - au moins un tensio-actif anionique choisi parmi les phosphates ou sulfates neutres des di(phényl-1 éthyl)phénols alcoxylés ou des tri(phényl-1 éthyl)phénols alcoxylés, de métaux alcalino-terreux, d'ammonium, d'alkyl- et /ou cycloalkyl-ammonium ou d'alcanolammonium,
   - au moins un tensio-actif non-ionique choisi parmi :
      + les di(phényl-1 éthyl)phénols alcoxylés et les tri(phényl-1 éthyl)phénols alcoxylés,
      + les nonyl-phénols éthoxypropoxylés ;
   - au moins un cotensio-actif choisi parmi :
      + les alcools aliphatiques, linéaires ou ramifiés, ayant de 3 à 10 atomes de carbone,
      + les alcools cycloaliphatiques ayant de 5 à 12 atomes de carbone,
      + les alcools arylaliphatiques ayant de 7 à 12 atomes de carbone,
      + les éthers-alcools de formule R-(OR')ₙ-OH dans laquelle :
   - R représente un radical alkyle, linéaire ou ramifié, ayant de 1 à 8 atomes de carbone,
   - R' représente un radical alkylène, tel que éthylène ou propylène,
   - n représente un nombre entier de 1 à 3,
      + les acides carboxyliques aliphatiques, linéaires ou ramifiés, ayant de 5 à 10 atomes de carbone,
- et de l'eau,
et en ce que le rapport pondéral tensio-actif anionique/tensio-actif non-ionique est de 10/90 à 90/10, et le rapport pondéral cotensio-actif/tensioactifs anionique et non-ionique est de 0,1 à 1,5, à l'exception des microémulsions comportant à titre de pyréthroïde, 40% de cyperméthrine et contenant à titre de tensio-actif anionique, le phosphate de tristyrylphénol éthoxylé neutralisé à la triéthanolamine de HLB égal à 16, à titre de tensio-actif non-ionique, le tristyrylphénol éthoxylé de HLB égal à 12,5 et à titre de cotensio-actif, l'isobutanol, et ne comprenant pas d'alkylbenzène sulfonates de métaux alcalins, alcalino-terreux, d'ammonium, d'alkyl- et/ou cycloalkylammonium ou d'alcanolammonium.

Les pyréthroïdes sont des composés actifs insecticides qui peuvent être utilisés notamment dans le domaine phytosanitaire ou dans la protection du bois.

On peut citer les plus connus :
- l'allétrine
- la bifenthrine
- la bioalléthrine
- la bioresméthrine
- la cyfluthrine
- la cyhallotrine
- la cyperméthrine
- la deltaméthrine
- la fenpropathrine
- la perméthrine
- la phénothrine
- les pyréthrines
- la resméthrine
- la téfluthrine
- la tétraméthrine
- la tralométhrine
- le 5-benzy 3-furyl méthyl (E) (1R) cis-2,2-diméthyl 3-(2-oxothiolan 3-ylidène méthyl)cyclopropane carboxylate.

Les pyréthroïdes peuvent être mis en oeuvre tels quels, notamment ceux qui sont liquides à température ambiante, c'est-à-dire à environ 10 à 25°C ou ceux qui peuvent demeurer en surfusion.

On peut également mettre les pyréthroïdes en solution dans un solvant organique insoluble dans l'eau (ou dans un mélange de tels solvants organiques), en particulier les pyréthroïdes qui ont un point de fusion supérieur à environ 50°C, sans que cette température soit une limite critique.

Comme solvant organique permettant de conserver les pyréthroïdes à l'état liquide, on peut citer par exemple les hydrocarbures aromatiques tels que le benzène, le toluène, les xylènes ; les coupes pétrolières aromatiques ; les esters d'alkyle d'acides gras tels que l'oléate de méthyle ; les phtalates de dialkyle tels que le phtalate de di(éthyl-2 hexyle) ; les hydrocarbures chlorés tels que le dichlorométhane, le trichlorométhane, le chloro-1,2 éthane ; les cétones cycliques tels que la cyclopentanone, la cyclohexanone ou l'isophorone.

Lorsqu'un solvant organique est utilisé, le rapport pondéral solvant organique/pyréthroïde peut varier largement de 5/95 à 90/10.

L'expression "pyréthroïde sous forme liquide" englobe donc dans le présent texte les pyréthroïdes liquides, en surfusion ou en solution. Dans ce dernier cas, les quantités de pyréthroïde exprimées dans les formulations comprennent à la fois le pyréthroïde lui-même et le solvant qui le contient.

On peut mettre en oeuvre un pyréthroïde ou un mélange de plusieurs pyréthroïdes dans les microémulsions de l'invention.

Parmi les tensio-actifs anioniques utilisés dans les microémulsions de pyréthroïdes, on peut citer plus particulièrement :
- les monoesters et diesters phosphoriques des di(phényl-1 éthyl)phénols éthoxylés comportant de 2 à 50 motifs oxyéthylène (OE),
- les monoesters et diesters phosphoriques des tri(phényl-1 éthyl)phénols éthoxylés comportant de 2 à 50 motifs OE,
- les monoesters et diesters phosphoriques des di(phényl-1 éthyl)phénols propoxylés comportant de 2 à 50 motifs oxypropylène (OP),
- les monoesters et diesters phosphoriques des tri(phényl-1 éthyl)phénols propoxylés comportant de 2 à 50 motifs OP,
- les monoesters et diesters phosphoriques des di(phényl-1 éthyl phénols éthoxypropoxylés comportant 2 à 50 motifs OE + OP,
- les monoesters et diesters phosphoriques des tri(phényl-1 éthyl)phénols éthoxypropoxylés comportant de 2 à 50 motifs OE + OP,
- les monoesters et diesters sulfuriques de di(phényl-1 éthyl)phénols éthoxylés comportant de 2 à 50 motifs OE,
- les monoesters et diesters sulfuriques de di(phényl-1 éthyl)phénols propoxylés comportant de 2 à 50 motifs OP,
- les monoesters et diesters sulfuriques de di(phényl-1 éthyl)phénols éthoxypropoxylés comportant de 2 à 50 motifs OE + OP,
- les monoesters et diesters sulfuriques de tri(phényl-1 éthyl)phénols éthoxylés comportant de 2 à 50 motifs OE,
- les monoesters et diesters sulfuriques de tri(phényl-1 éthyl)phénols propoxylés comportant de 2 à 50 motifs OP,
- les monoesters et diesters sulfuriques des tri(phényl-1 éthyl)phénols éthoxypropylés comportant de 2 à 50 motifs OE + OP,
dont les éventuelles fonctions acides libres sont neutralisées par des alcanolamines, des cations ammonium, potassium ou sodium.

A titre d'exemples de tensio-actifs anioniques, on peut citer de manière non limitative certains composés comme :
- les sels de triéthanolamine des monoester et diester phosphoriques du tri(phényl-1 éthyl)phénol éthoxylé avec 16 motifs OE,
- les sels de potassium des monoester et diester phosphoriques du tri(phényl-1 éthyl)phénol éthoxylé avec 16 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl)phénol éthoxylé avec 16 motifs OE,
- le sel d'ammonium du monoester sulfurique du di(phényl-1 éthyl)phénol éthoxylé avec 5 motifs OE,
- le sel d'ammonium du monoester sulfurique du di(phényl-1 éthyl)phénol éthoxylé avec 7 motifs OE,
- le sel d'ammonium du monoester sulfurique du di(phényl-1 éthyl)phénol éthoxylé avec 11 motifs OE.

On peut bien entendu utiliser des mélanges de plusieurs tensio-actifs anioniques, sans sortir du cadre de l'invention.

Parmi les tensio-actifs non-ioniques utilisés dans les microémulsions, on peut citer plus particulièrement :
- les di(phényl-1 éthyl)phénols éthoxylés comportant de 2 à 50 motifs OE,
- les di-phényl-1 éthyl)phénols propoxylés comportant de 2 à 50 motifs OP,
- les di(phényl-1 éthyl)phénols éthoxypropoxylés comportant de 2 à 50 motifs OE + OP,
- les tri(phényl-1 éthyl)phénols éthoxylés comportant de 2 à 50 motifs OE,
- les tri(phényl-1 éthyl)phénols propoxylés comportant de 2 à 50 motifs OP,
- les tri(phényl-1 éthyl)phénols éthoxypropoxylés comportant de 2 à 50 motifs OE + OP,
- les nonyl-phénols éthoxypropoxylés comportant 2 à 100 motifs OE + OP.

A titre d'exemples de tensio-actifs non-ioniques, on peut citer de manière non limitative certains composés comme :
- les nonyl-phénols éthoxypropoxylés ayant 25 motifs OE + OP,
- les nonyl-phénols éthoxypropoxylés ayant 30 motifs OE + OP,
- les nonyl-phénols éthoxypropoxylés ayant 40 motifs OE + OP,
- les nonyl-phénols éthoxypropoxylés ayant 55 motifs OE + OP,
- les nonyl-phénols éthoxypropoxylés ayant 80 motifs OE + OP,
- les tri(phényl-1 éthyl)phénols éthoxypropoxylés ayant 25 motifs OE + OP,
- le tri(phényl-1 éthyl)phénol éthoxylé ayant 16 motifs OE,
- le tri(phényl-1 éthyl)phénol éthoxylé ayant 20 motifs OE,
- le tri(phényl-1 éthyl)phénol éthoxylé ayant 25 motifs OE,
- le tri(phényl-1 éthyl)phénol éthoxylé ayant 40 motifs OE,
- le di(phényl-1 éthyl)phénol éthoxylé ayant 5 motifs OE.
- le di(phényl-1 éthyl)phénol éthoxylé ayant 11 motifs OE.
- le di(phényl-1 éthyl)phénol éthoxylé ayant 15 motifs OE.

Comme pour les tensio-anioniques, on peut sans sortir du cadre de l'invention, utiliser des mélanges de plusieurs tensio-actifs non-ioniques.

Parmi les cotensio-actifs, on peut citer de manière non limitative le n-butanol, l'isobutanol (butanol-2), le n-propanol, l'isopropanol(propanol-2), le n-pentanol et ses isomères ramifiés, le n-hexanol et ses isomères ramifiés, le cyclopentanol, le cyclohexanol, les méthyl-cyclohexanols, l'alcool benzylique, l'alcool phényléthylique, le méthoxy-2 éthanol, l'éthoxy-2 éthanol, l'isopropoxy-2 éthanol, le n-butoxy-2 éthanol, le monométhyléther du diéthylène-glycol, le monoéthyléther du diéthylène-glycol, le mono-n-butyléther du diéthylène-glycol, le monoéthyléther du triéthylèneglycol, l'acide heptanoïque et ses isomères ramifiés, l'acide octanoïque et ses isomères ramifiés, l'acide nonanoïque et ses isomères ramifiés, l'acide décanoïque et ses isomères ramifiés.

On peut également utiliser des mélanges de cotensio-actifs.

De manière générale, on préfèrera utiliser des cotensio-actifs ayant un point de flash supérieur à 50°C.

Le point de flash est défini comme la température à partir de laquelle les vapeurs du produit s'enflamment spontanément au contact d'une flamme.

De préférence les microémulsions selon l'invention comportent :
- de 0,1 % à 70 % de leur poids d'au moins un pyréthroïde sous forme liquide,
- de 2 % à 50 % de leur poids d'un système tensio-actif, comportant au moins un tensio-actif anionique, au moins un tensio-actif non-ionique et au moins un cotensio-actif, dans lequel le rapport pondéral tensio-actif anionique/tensio-actif non-ionique est de 15/85 à 85/15 et le rapport pondéral cotensio-actif/tensio-actifs anionique et non-ionique est de 0,25 à 0,80.

Les microémulsions selon l'invention peuvent contenir, outre les composés définis précédemment, d'autres composés usuels dans les compositions phytosanitaires, tels que des antimousses comme les organopolysiloxanes, les épaississants comme la gomme xanthane, des conservateurs, un antigel comme le monopropylèneglycol ou le monoéthylèneglycol.

Les microémulsions selon l'invention sont stables dans un domaine de température de -5°C à +45°C.

Les microémulsions sont préparées par simple mélangeage des différents constituants.

Elles ne font apparaître aucun phénomène de coalescence, de cristallisation ou de sédimentation au stockage.

Elles peuvent être utilisées pour la lutte contre les insectes, notamment dans le traitement des cultures ou la protection du bois, soit directement, soit après dilution à l'eau lors de leur mise en oeuvre. Lors de leur dilution, elles conduisent à des émulsions ou des microémulsions stables. Dans le domaine phytosanitaire, les émulsions ou microémulsions diluées sont préparées par l'utilisateur au moment de l'emploi et ne sont pas généralement conservées plus de 24 heures.

Les exemples suivants illustrent l'invention.

### EXEMPLE 1 :

On prépare une microémulsion en mélangeant sous agitation, les composés suivants :

| | |
|---|---|
| - cyperméthrine : | 10,90 g |
| - tri(phényl-1 éthyl)phénol éthoxylé comportant 16 motifs OE : | 15,34 g |
| - phosphate de tri(phényl-1 éthyl)phénol éthoxylé comportant 16 motifs OE et neutralisé par de la triéthanolamine : | 8,26 g |
| - isobutanol : | 11,80 g |
| - eau (complément pour 100 g) : | 53,70 g |

On obtient une microémulsion limpide (par définition) fluide et stable en cycle de températures -5°C, +45°C.

### EXEMPLE 2 :

On répète l'exemple 1 avec les composés suivants :

| | |
|---|---|
| - cyperméthrine : | 27,90 g |
| - tri(phényl-1 éthyl)phénol éthoxylé comportant 16 motifs OE : | 18,64 g |
| - phosphate de tri(phényl-1 éthyl)phénol éthoxylé comportant 16 motifs OE et neutralisé par de la triéthanolamine : | 10,03 g |
| - isobutanol : | 14,33 g |
| - eau (complément pour 100 g) : | 29,10 g |

On obtient une microémulsion limpide, fluide et stable en cycle de températures -5°C, +45°C.

### EXEMPLE 3 :

On répète l'exemple 1 avec les composés suivants :

| | |
|---|---|
| - cyperméthrine : | 9,40 g |
| - tri(phényl-1 éthyl)phénol éthoxylé comportant 16 motifs OE : | 14,26 g |
| - phosphate de tri(phényl-1 éthyl)phénol éthoxylé comportant 16 motifs OE et neutralisé par de la triéthanolamine : | 7,68 g |
| - cyclohexanol : | 16,46 g |
| - eau (complément pour 100 g) : | 52,20 g |

On obtient une microémulsion limpide, fluide et stable en cycle de températures -5°C, +45°C.

### EXEMPLE 4 :

On répète l'exemple 1 avec les composés suivants :

| | |
|---|---|
| - cyperméthrine : | 26,10 g |
| - tri(phényl-1 éthyl)phénol éthoxylé comportant 16 motifs OE : | 25,63 g |
| - phosphate de tri(phényl-1 éthyl)phénol éthoxylé comportant 16 motifs OE et neutralisé par de la triéthanolamine : | 13,80 g |
| - cyclohexanol : | 29,57 g |
| - eau (complément pour 100 g) : | 4,90 g |

On obtient une microémulsion limpide, fluide et stable en cycle de températures -5°C, +45°C.

### EXEMPLE 5 :

On répète l'exemple 1 avec les composés suivants :

| | |
|---|---|
| - cyperméthrine : | 9,0 g |
| - di(phényl-1 éthyl)phénol éthoxylé comportant 15 motifs OE : | 33,98 g |
| - sulfate de di(phényl-1 éthyl)phénol éthoxylé comportant 15 motifs OE et neutralisé par KOH : | 18,30 g |
| - isobutanol : | 26,14 g |
| - eau (complément pour 100 g) : | 12,58 g |

On obtient une microémulsion limpide, fluide et stable en cycle de températures -5°C, +45°C.

### EXEMPLE 6 :

On répète l'exemple 1 avec les composés suivants :

| | |
|---|---|
| - cyperméthrine : | 23,0 g |
| - di(phényl-1 éthyl)phénol éthoxylé comportant 15 motifs OE : | 25,52 g |
| - sulfate de di(phényl-1 éthyl)phénol éthoxylé comportant 15 motifs OE et neutralisé par KOH : | 13,74 g |
| - isobutanol : | 19,64 g |
| - eau (complément pour 100 g) : | 18,10 g |

On obtient une microémulsion limpide, fluide et stable en cycle de températures -5°C, +45°C.

### EXEMPLE 7 :

On répète l'exemple 1 avec les composés suivants :

| | |
|---|---|
| - perméthrine : | 9,03 g |
| - tri(phényl-1 éthyl)phénol éthoxylé comportant 16 motifs OE : | 20,11 g |
| - phosphate de tri(phényl-1 éthyl)phénol éthoxylé comportant 16 motifs OE et neutralisé par de la triéthanolamine : | 10,83 g |
| - isobutanol : | 15,46 g |
| - eau (complément pour 100 g) : | 44,57 g |

On obtient une microémulsion limpide, fluide et stable en cycle de températures -5°C, +45°C.

### EXEMPLE 8 :

On répète l'exemple 1 avec les composés suivants :

| | |
|---|---|
| - perméthrine : | 26,80 g |
| - tri(phényl-1 éthyl)phénol éthoxylé comportant 16 motifs OE : | 18,46 g |
| - phosphate de tri(phényl-1 éthyl)phénol éthoxylé comportant 16 motifs OE et neutralisé par de la triéthanolamine : | 9,94 g |
| - isobutanol : | 14,20 g |
| - eau (complément pour 100 g) : | 30,60 g |

On obtient une microémulsion limpide, fluide et stable en cycle de températures -5°C, +45°C.

### EXEMPLE 9 :

On répète l'exemple 1 avec les composés suivants :

| | |
|---|---|
| - cyperméthrine : | 27,60 g |
| - tri(phényl-1 éthyl)phénol éthoxylé comportant 16 motifs OE : | 22,95 g |
| - phosphate de tri(phényl-1 éthyl)phénol éthoxylé comportant 16 motifs OE et neutralisé par de la triéthanolamine : | 12,36 g |
| - cyclohexanol : | 26,49 g |
| - eau (complément pour 100 g) : | 10,60 g |

On obtient une microémulsion limpide, fluide et stable en cycle de températures -5°C, +45°C.

### EXEMPLE 10 :

On répète l'exemple 1 avec les composés suivants :

| | |
|---|---|
| - deltaméthrine : | 8,70 g |
| - coupe pétrolière aromatique (Solvesso 150) : | 28,40 g |
| - cyclohexanone : | 15,20 g |
| - tri(phényl-1 éthyl)phénol éthoxylé comportant 16 motifs OE : | 13,50 g |
| - sulfate de tri(phényl-1 éthyl)phénol éthoxylé comportant 16 motifs OE neutralisé par NH₃ : | 7,30 g |
| - cyclohexanol : | 13,90 g |
| - monopropylèneglycol : | 2,60 g |
| - eau (complément pour 100 g) : | 10,40 g |

On obtient une microémulsion limpide, fluide et stable en cycle de températures -5°C, +45°C.

### EXEMPLE 11 :

On répète l'exemple 1 avec les composés suivants :

| | |
|---|---|
| - perméthrine : | 42,30 g |
| - tri(phényl-1 éthyl)phénol éthoxylé comportant 16 motifs OE : | 17,16 g |
| - phosphate de tri(phényl-1 éthyl)phénol éthoxylé comportant 16 motifs OE et neutralisé par de la triéthanolamine : | 9,24 g |
| - cyclohexanol : | 20,0 g |
| - eau (complément pour 100 g) : | 11,30 g |

On obtient une microémulsion limpide, fluide et stable en cycle de températures -5°C, +45°C.

### EXEMPLE 12 :

On répète l'exemple 1 avec les composés suivants :

| | |
|---|---|
| - cyperméthrine : | 48,6 g |
| - tri(phényl-1 éthyl)phénol éthoxylé comportant 16 motifs OE : | 15,50 g |
| - phosphate de tri(phényl-1 éthyl)phénol éthoxylé comportant 16 motifs OE et neutralisé par de la triéthanolamine : | 8,30 g |
| - cyclohexanol : | 18,0 g |
| - eau (complément pour 100 g) : | 9,60 g |

On obtient une microémulsion limpide, fluide et stable en cycle de températures -5°C, +45°C.

### EXEMPLE 13 :

On répète l'exemple 1 avec les composés suivants :

| | |
|---|---|
| - cyperméthrine : | 45,6 g |
| - tri(phényl-1 éthyl)phénol éthoxylé comportant 25 motifs OE : | 6,0 g |
| - phosphate de tri(phényl-1 éthyl)phénol éthoxylé comportant 16 motifs OE et neutralisé par de la triéthanolamine : | 24,0 g |
| - isobutanol : | 14,8 g |
| - eau (complément pour 100 g) : | 9,6 g |

On obtient une microémulsion limpide, fluide et stable en cycle de températures -5°C, +45°C.

### EXEMPLE 14 :

On répète l'exemple 1 avec les composés suivants :

| | |
|---|---|
| - cyperméthrine : | 47,3 g |
| - tri(phényl-1 éthyl)phénol éthoxylé comportant 16 motifs OE : | 15,9 g |
| - sulfate de di(phényl-1 éthyl)phénol éthoxylé comportant 15 motifs OE et neutralisé par KOH : | 10,14 g |
| - isobutanol : | 14,52 g |
| - eau (complément pour 100 g) : | 12,14 g |

On obtient une microémulsion limpide, fluide et stable en cycle de températures -5°C, +45°C.

### EXEMPLE 15 :

On répète l'exemple 1 avec les composés suivants :

| | |
|---|---|
| - cyperméthrine : | 47,3 g |
| - tri(phényl-1 éthyl)phénol éthoxylé comportant 16 motifs OE : | 21,7 g |
| - dodécylbenzène sulfonate de calcium : | 13,0 g |
| - isobutanol : | 8,7 g |
| - eau (complément pour 100 g) : | 9,3 g |

On obtient une microémulsion limpide, fluide et stable en cycle de températures -5°C, +45°C.

### EXEMPLE 16 :

On répète l'exemple 1 avec les composés suivants :

| | |
|---|---|
| - cyperméthrine : | 28,0 g |
| - tri(phényl-1 éthyl)phénol éthoxylé comportant 16 motifs OE : | 10,27 g |
| - phosphate de tri(phényl-1 éthyl)phénol éthoxylé comportant 16 motifs OE et neutralisé par KOH | 19,06 g |
| - isobutanol : | 14,67 g |
| - eau (complément pour 100 g) : | 28,0 g |

On obtient une microémulsion limpide, fluide et stable en cycle de températures -5°C, +45°C.

### EXEMPLE 17 :

On répète l'exemple 1 avec les composés suivants :

| | |
|---|---|
| - cyperméthrine : | 28,0 g |
| - tri(phényl-1 éthyl)phénol éthoxylé comportant 16 motifs OE : | 10,27 g |
| - phosphate de tri(phényl-1 éthyl)phénol éthoxylé comportant 16 motifs OE et neutralisé par NH₃ | 19,06 g |
| - isobutanol : | 14,67 g |
| - eau (complément pour 100 g) : | 28,0 g |

On obtient une microémulsion limpide, fluide et stable en cycle de températures -5°C, +45°C.

### ESSAI COMPARATIF A :

On répète l'exemple 1 avec les composés suivants :

| | |
|---|---|
| - cyperméthrine : | 28,0 g |
| - tri(phényl-1 éthyl)phénol éthoxylé comportant 16 motifs OE : | 10,27 g |
| - phosphate de tri(phényl-1 éthyl)phénol éthoxylé comportant 16 motifs OE sous forme acide : | 19,06 g |
| - isobutanol : | 14,67 g |
| - eau (complément pour 100 g) : | 28,0 g |

On obtient une microémulsion limpide, fluide et stable à 20°C, mais instable lorsqu'elle est soumise à des cycles thermiques dans la zone de température -5°C, +45°C.

### EXEMPLE 18 :

On répète l'exemple 1 avec les composés suivants :

| | |
|---|---|
| - cyperméthrine : | 58,0 g |
| - tri(phényl-1 éthyl)phénol éthoxylé comportant 16 motifs OE : | 8,17 g |
| - phosphate de tri(phényl-1 éthyl)phénol éthoxylé comportant 16 motifs OE et neutralisé par KOH | 15,16 g |
| - isobutanol : | 11,67 g |
| - eau (complément pour 100 g) : | 7,0 g |

On obtient une microémulsion limpide, fluide et stable en cycle de températures -5°C, +45°C.

### EXEMPLE 19 :

On répète l'exemple 1 avec les composés suivants :

| | |
|---|---|
| - cyperméthrine : | 58,0 g |
| - tri(phényl-1 éthyl)phénol éthoxylé comportant 16 motifs OE : | 8,17 g |
| - phosphate de tri(phényl-1 éthyl)phénol éthoxylé comportant 16 motifs OE et neutralisé par NH₃ | 15,16 g |
| - isobutanol : | 11,67 g |
| - eau (complément pour 100 g) : | 7,0 g |

On obtient une microémulsion limpide, fluide et stable en cycle de températures -5°C, +45°C.

### ESSAI COMPARATIF B :

On répète l'exemple 1 avec les composés suivants :

| | |
|---|---|
| - cyperméthrine : | 58,0 g |
| - tri(phényl-1 éthyl)phénol éthoxylé comportant 16 motifs OE : | 8,17 g |
| - phosphate de tri(phényl-1 éthyl)phénol éthoxylé comportant 16 motifs OE sous forme acide | 15,16 g |
| - isobutanol : | 11,67 g |
| - eau (complément pour 100 g) : | 7,0 g |

On obtient une microémulsion limpide, fluide et stable à 20°C, mais instable lorsqu'elle est soumise à des cycles thermiques dans la zone de température -5°C, +45°C.

### EXEMPLE 20 :

On répète l'exemple 1 avec les composés suivants :

| | |
|---|---|
| - cyperméthrine : | 8,0 g |
| - tri(phényl-1 éthyl)phénol éthoxylé comportant 16 motifs OE : | 7,23 g |
| - phosphate de tri(phényl-1 éthyl)phénol éthoxylé comportant 16 motifs OE et neutralisé par KOH | 13,43 g |
| - isobutanol : | 10,34 g |
| - eau (complément pour 100 g) : | 61,0 g |

On obtient une microémulsion limpide, fluide et stable en cycle de températures -5°C, +45°C.

### EXEMPLE 21 :

On répète l'exemple 1 avec les composés suivants :

| | |
|---|---|
| - cyperméthrine : | 8,0 g |
| - tri(phényl-1 éthyl)phénol éthoxylé comportant 16 motifs OE : | 7,23 g |
| - phosphate de tri(phényl-1 éthyl)phénol éthoxylé comportant 16 motifs OE et neutralisé par NH₃ | 13,43 g |
| - isobutanol : | 10,34 g |
| - eau (complément pour 100 g) : | 61,0 g |

On obtient une microémulsion limpide, fluide et stable en cycle de températures -5°C, +45°C.

### ESSAI COMPARATIF C :

On répète l'exemple 1 avec les composés suivants :

| | |
|---|---|
| - cyperméthrine : | 8,0 g |
| - tri(phényl-1 éthyl)phénol éthoxylé comportant 16 motifs OE : | 7,23 g |
| - phosphate de tri(phényl-1 éthyl)phénol éthoxylé comportant 16 motifs OE sous forme acide | 13,43 g |
| - isobutanol : | 10,34 g |
| - eau (complément pour 100 g) : | 61,0 g |

On obtient une microémulsion limpide, fluide et stable à 20°C, mais instable lorsqu'elle est soumise à des cycles thermiques dans la zone de température -5°C, +45°C.

### EXEMPLE 22 :

On répète l'exemple 1 avec les composés suivants :

| | |
|---|---|
| - cyperméthrine : | 8,0 g |
| - tri(phényl-1 éthyl)phénol éthoxylé comportant 16 motifs OE : | 10,13 g |
| - sulfate de tri(phényl-1 éthyl)phénol éthoxylé comportant 16 motifs OE et neutralisé par NH₃ | 10,13 g |
| - isobutanol : | 10,13 g |
| - eau (complément pour 100 g) : | 61,61 g |

On obtient une microémulsion limpide, fluide et stable en cycle de températures -5°C, +45°C.

### ESSAI COMPARATIF D :

On répète l'exemple 1 avec les composés suivants :

| | |
|---|---|
| - cyperméthrine : | 8,0 g |
| - nonyl-phénol éthoxylé comportant 10 motifs OE : | 10,13 g |
| - sulfate de tri(phényl-1 éthyl)phénol éthoxylé comportant 16 motifs OE et neutralisé par NH₃ | 10,13 g |
| - isobutanol : | 10,13 g |
| - eau (complément pour 100 g) : | 61,61 g |

On obtient une microémulsion limpide, fluide et stable à 20°C, mais instable lorsqu'elle est soumise à des cycles thermiques dans la zone de température -5°C, +45°C.

### ESSAI COMPARATIF E :

On répète l'exemple 1 avec les composés suivants :

| | |
|---|---|
| - cyperméthrine : | 8,0 g |
| - nonyl-phénol éthoxylé comportant 17 motifs OE : | 10,13 g |
| - sulfate de tri(phényl-1 éthyl)phénol éthoxylé comportant 16 motifs OE et neutralisé par NH₃ | 10,13 g |
| - isobutanol : | 10,13 g |
| - eau (complément pour 100 g) : | 61,61 g |

On obtient une microémulsion limpide, fluide et stable à 20°C, mais instable lorsqu'elle est soumise à des cycles thermiques dans la zone de température -5°C, +45°C.

### EXEMPLE 23 :

On répète l'exemple 1 avec les composés suivants :

| | |
|---|---|
| - cyperméthrine : | 28,0 g |
| - tri(phényl-1 éthyl)phénol éthoxylé comportant 16 motifs OE : | 14,67 g |
| - sulfate de tri(phényl-1 éthyl)phénol éthoxylé comportant 16 motifs OE et neutralisé par NH₃ | 14,67 g |
| - isobutanol : | 14,66 g |
| - eau (complément pour 100 g) : | 28,0 g |

On obtient une microémulsion limpide, fluide et stable en cycle de températures -5°C, +45°C.

### ESSAI COMPARATIF F :

On répète l'exemple 1 avec les composés suivants :

| | |
|---|---|
| - cyperméthrine : | 28,0 g |
| - nonyl-phénol éthoxylé comportant 10 motifs OE : | 14,67 g |
| - sulfate de tri(phényl-1 éthyl)phénol éthoxylé comportant 16 motifs OE et neutralisé par NH₃ | 14,67 g |
| - isobutanol : | 14,66 g |
| - eau (complément pour 100 g) : | 28,0 g |

On obtient une microémulsion limpide, fluide et stable à 20°C, mais instable lorsqu'elle est soumise à des cycles thermiques dans la zone de température -5°C, +45°C.

### ESSAI COMPARATIF G :

On répète l'exemple 1 avec les composés suivants :

| | |
|---|---|
| - cyperméthrine : | 28,0 g |
| - nonyl-phénol éthoxylé comportant 17 motifs OE : | 14,67 g |
| - sulfate de tri(phényl-1 éthyl)phénol éthoxylé comportant 16 motifs OE et neutralisé par NH₃ | 14,67 g |
| - isobutanol : | 14,66 g |
| - eau (complément pour 100 g) : | 28,0 g |

On obtient une microémulsion limpide, fluide et stable à 20°C, mais instable lorsqu'elle est soumise à des cycles thermiques dans la zone de température -5°C, +45°C.

## Revendications (Revendications pour l'(les) Etat(s) contractant(s) suivant(s): AT, BE, CH, DE, DK, FR, GB, IT, LI, LU, NL, PT, SE)

1. Microémulsions stables de pyréthroïde, caractérisées en ce qu'elles comportent :
- de 0,1% à 95% en poids d'au moins un pyréthroïde sous forme liquide,
- de 2% à 90% en poids d'un système tensio-actif comprenant :
• au moins un tensio-actif anionique choisi parmi les phosphates ou sulfates neutres des di(phényl-1 éthyl)phénols alcoxylés ou des tri(phényl-1 éthyl)phénols alcoxylés, de métaux alcalino-terreux, d'ammonium, d'alkyl- et/ou cycloalkyl-ammonium ou d'alcanolammonium,
• au moins un tensio-actif non-ionique choisi parmi :
+ les di(phényl-1 éthyl)phénols alcoxylés et les tri(phényl-1 éthyl)phénols alcoxylés,
+ les nonyl-phénols éthoxypropoxylés ;
• au moins un cotensio-actif choisi parmi :
+ les alcools aliphatiques, linéaires ou ramifiés, ayant de 3 à 10 atomes de carbone,
+ les alcools cycloaliphatiques ayant de 5 à 12 atomes de carbone,
+ les alcools arylaliphatiques ayant de 7 à 12 atomes de carbone,
+ les éthers-alcools de formule R-(OR')ₙ-OH dans laquelle :
• R représente un radical alkyle, linéaire ou ramifié, ayant de 1 à 8 atomes de carbone,
• R' représente un radical alkylène, tel que éthylène ou propylène,
• n représente un nombre entier de 1 à 3,
+ les acides carboxyliques aliphatiques, linéaires ou ramifiés, ayant de 5 à 10 atomes de carbone,
- et de l'eau,
et en ce que le rapport pondéral tensio-actif anionique/tensio-actif non-ionique est de 10/90 à 90/10, le rapport pondéral cotensio-actif/tensio-actifs anionique et non-ionique est de 0,1 à 1,5, à l'exception des microémulsions comportant à titre de pyréthroïde, 40% de cyperméthrine et contenant à titre de tensio-actif anionique, le phosphate de tristyrylphénol éthoxylé neutralisé à la triéthanolamine de HLB égal à 16, à titre de tensio-actif non ionique, le tristyrylphénol éthoxylé de HLB égal à 12,5 et à titre de cotensio-actif, l'isobutanol, et ne comprenant pas d'alkylbenzène sulfonates de métaux alcalins, alcalino-terreux, d'ammonium, d'alkyl- et/ou cycloalkylammonium ou d'alcanolammonium.

2. Microémulsions selon la revendication 1, caractérisées en ce que les pyréthroïdes sont des composés actifs insecticides choisis parmi :
- l'alléthrine
- la bifenthrine
- la bioalléthrine
- la bioresméthrine
- la cyfluthrine
- la cyhallothrine
- la cyperméthrine
- la deltaméthrine
- la fenpropathrine
- la perméthrine
- la phénothrine
- les pyréthrines
- la resméthrine
- la téfluthrine
- la tétraméthrine
- la tralométhrine
- le 5-benzy 3-furyl méthyl(E) (1R) cis-2,2-diméthyl 3-(2-oxothiolan 3-ylidène méthyl)cyclopropane carboxylate.

3. Microémulsions selon l'une des revendications 1 ou 2, caractérisées en ce que les pyréthroïdes mis en oeuvre sont ceux qui sont liquides à température ambiante ou ceux qui peuvent demeurer en surfusion.

4. Microémulsions selon l'une des revendications 1 à 3, caractérisées en ce que les pyréthroïdes mis en oeuvre sont en solution dans un solvant organique insoluble dans l'eau.

5. Microémulsions selon la revendication 4, caractérisées en ce que le solvant organique, permettant de conserver les pyréthroïdes à l'état liquide, est choisi parmi les hydrocarbures aromatiques tels que le benzène, le toluène, les xylènes ; les coupes pétrolières aromatiques ; les esters d'alkyle d'acides gras tels que l'oléate de méthyle ; les phtalates de dialkyle tels que le phtalate de di(éthyl-2 hexyle) ; les hydrocarbures chlorés tels que le dichlorométhane, le trichlorométhane, le chloro-1,2 éthane ; les cétones cycliques tels que la cyclopentanone, la cyclohexanone ou l'isophorone.

6. Microémulsions selon l'une des revendications 4 ou 5, caractérisées en ce que le rapport pondéral solvant organique/pyréthroïde varie de 5/95 à 90/10.

7. Microémulsions selon l'une des revendications 1 à 6, caractérisées en ce que les tensio-actifs anioniques utilisés sont choisis parmi :
- les monoesters et diesters phosphoriques des di(phényl-1 éthyl)phénols éthoxylés comportant de 2 à 50 motifs oxyéthylène (OE),
- les monoesters et diesters phosphoriques des tri(phényl-1 éthyl)phénols éthoxylés comportant de 2 à 50 motifs OE,
- les monoesters et diesters phosphoriques des di(phényl-1 éthyl)phénols propoxylés comportant de 2 à 50 motifs oxypropylène (OP),
- les monoesters et diesters phosphoriques des tri(phényl-1 éthyl)phénols propoxylés comportant de 2 à 50 motifs OP,
- les monoesters et diesters phosphoriques des di(phényl-1 éthyl phénols éthoxypropoxylés comportant 2 à 50 motifs OE + OP,
- les monoesters et diesters phosphoriques des tri(phényl-1 éthyl)phénols éthoxypropoxylés comportant de 2 à 50 motifs OE + OP,
- les monoesters et diesters sulfuriques de di(phényl-1 éthyl)phénols éthoxylés comportant de 2 à 50 motifs OE,
- les monoesters et diesters sulfuriques de di(phényl-1 éthyl)phénols propoxylés comportant de 2 à 50 motifs OP,
- les monoesters et diesters sulfuriques de di(phényl-1 éthyl)phénols éthoxypropoxylés comportant de 2 à 50 motifs OE + OP,
- les monoesters et diesters sulfuriques de tri(phényl-1 éthyl)phénols éthoxylés comportant de 2 à 50 motifs OE,
- les monoesters et diesters sulfuriques de tri(phényl-1 éthyl)phénols propoxylés comportant de 2 à 50 motifs OP,
- les monoesters et diesters sulfuriques des tri(phényl-1 éthyl)phénols éthoxypropylés comportant de 2 à 50 motifs OE + OP,
dont les éventuelles fonctions acides libres sont neutralisées par des alcanolamines, des cations ammonium, potassium ou sodium.

8. Microémulsions selon l'une des revendications 1 à 7, caractérisées en ce que les tensio-actifs anioniques utilisés sont choisis parmi :
- les sels de triéthanolamine des monoester et diester phosphoriques du tri(phényl-1 éthyl)phénol éthoxylé avec 16 motifs OE,
- les sels de potassium des monoester et diester phosphoriques du tri(phényl-1 éthyl)phénol éthoxylé avec 16 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl)phénol éthoxylé avec 16 motifs OE,
- le sel d'ammonium du monoester sulfurique du di(phényl-1 éthyl)phénol éthoxylé avec 5 motifs OE,
- le sel d'ammonium du monoester sulfurique du di(phényl-1 éthyl)phénol éthoxylé avec 7 motifs OE,
- le sel d'ammonium du monoester sulfurique du di(phényl-1 éthyl)phénol éthoxylé avec 11 motifs OE.

9. Microémulsions selon l'une des revendications 1 à 8, caractérisées en ce que les tensio-actifs non-ioniques utilisés sont choisis parmi :
- les di(phényl-1 éthyl)phénols éthoxylés comportant de 2 à 50 motifs OE,
- les di-phényl-1 éthyl)phénols propoxylés comportant de 2 à 50 motifs OP,
- les di(phényl-1 éthyl)phénols éthoxypropoxylés comportant de 2 à 50 motifs OE + OP,
- les tri(phényl-1 éthyl)phénols éthoxylés comportant de 2 à 50 motifs OE,
- les tri(phényl-1 éthyl)phénols propoxylés comportant de 2 à 50 motifs OP,
- les tri(phényl-1 éthyl)phénols éthoxypropoxylés comportant de 2 à 50 motifs OE + OP,
- les nonyl-phénols éthoxypropoxylés comportant de 2 à 100 motifs OE + OP.

10. Microémulsions selon l'une des revendications 1 à 9, caractérisées en ce que les tensio-actifs non-ioniques utilisés sont choisis parmi :
- les nonyl-phénols éthoxypropoxylés ayant 25 motifs OE + OP,
- les nonyl-phénols éthoxypropoxylés ayant 30 motifs OE + OP,
- les nonyl-phénols éthoxypropoxylés ayant 40 motifs OE + OP,
- les nonyl-phénols éthoxypropoxylés ayant 55 motifs OE + OP,
- les nonyl-phénols éthoxypropoxylés ayant 80 motifs OE + OP,
- les tri(phényl-1 éthyl)phénols éthoxypropoxylés ayant 25 motifs OE + OP,
- le tri(phényl-1 éthyl)phénol éthoxylé ayant 16 motifs OE,
- le tri(phényl-1 éthyl)phénol éthoxylé ayant 20 motifs OE,
- le tri(phényl-1 éthyl)phénol éthoxylé ayant 25 motifs OE,
- le tri(phényl-1 éthyl)phénol éthoxylé ayant 40 motifs OE,
- le di(phényl-1 éthyl)phénol éthoxylé ayant 5 motifs OE.
- le di(phényl-1 éthyl)phénol éthoxylé ayant 11 motifs OE.
- le di(phényl-1 éthyl)phénol éthoxylé ayant 15 motifs OE.

11. Microémulsions selon l'une des revendications 1 à 10, caractérisées en ce que les cotensio-actifs sont choisis parmi le n-butanol, l'isobutanol(butanol-2), le n-propanol, l'isopropanol(propanol-2), le n-pentanol et ses isomères ramifiés, le n-hexanol et ses isomères ramifiés, le cyclopentanol, le cyclohexanol, les méthyl-cyclohexanols, l'alcool benzylique, l'alcool phényléthylique, le méthoxy-2 éthanol, l'éthoxy-2 éthanol, l'isopropoxy-2 éthanol, le n-butoxy-2 éthanol, le monométhyléther du diéthylène-glycol, le monoéthyléther du diéthylène-glycol, le mono-n-butyléther du diéthylène-glycol, le monoéthyléther du triéthylèneglycol, l'acide heptanoïque et ses isomères ramifiés, l'acide octanoïque et ses isomères ramifiés, l'acide nonanoïque et ses isomères ramifiés, l'acide décanoïque et ses isomères ramifiés.

12. Microémulsions selon l'une des revendications 1 à 11, caractérisées en ce qu'elles comportent :
- de 0,1 % à 70 % de leur poids d'au moins un pyréthroïde sous forme liquide,
- de 2 % à 50 % de leur poids d'un système tensio-actif,
comportant au moins un tensio-actif anionique, au moins un tensio-actif non-ionique et au moins un cotensio-actif, dans lequel le rapport pondéral tensio-actif anionique/tensio-actif non-ionique est de 15/85 à 85/15 et le rapport pondéral cotensio-actif/tensio-actifs anionique et non-ionique est de 0,25 à 0,80.

13. Utilisation des microémulsions selon l'une des revendications 1 à 12, eventuellement après dilution à l'eau lors de leur mise en oeuvre, pour la lutte contre les insectes, notamment dans le traitement des cultures ou la protection du bois.

## Revendications (Revendications pour l'(les) Etat(s) contractant(s) suivant(s): ES, GR)

1. Procédé de préparation de microémulsions stables de pyréthroïde, caractérisées en ce qu'elles sont obtenues par mélange :
- de 0,1% à 95% en poids d'au moins un pyréthroïde sous forme liquide,
- de 2% à 90% en poids d'un système tensio-actif comprenant :
• au moins un tensio-actif anionique choisi parmi les phosphates ou sulfates neutres des di(phényl-1 éthyl)phénols alcoxylés ou des tri(phényl-1 éthyl)phénols alcoxylés, de métaux alcalino-terreux, d'ammonium, d'alkyl- et/ou cycloalkyl-ammonium ou d'alcanolammonium,
• au moins un tensio-actif non-ionique choisi parmi :
+ les di(phényl-1 éthyl)phénols alcoxylés et les tri(phényl-1 éthyl)phénols alcoxylés,
+ les nonyl-phénols éthoxypropoxylés ;
• au moins un cotensio-actif choisi parmi :
+ les alcools aliphatiques, linéaires ou ramifiés, ayant de 3 à 10 atomes de carbone,
+ les alcools cycloaliphatiques ayant de 5 à 12 atomes de carbone,
+ les alcools arylaliphatiques ayant de 7 à 12 atomes de carbone,
+ les éthers-alcools de formule R-(OR')ₙ-OH dans laquelle :
• R représente un radical alkyle, linéaire ou ramifié, ayant de 1 à 8 atomes de carbone,
• R' représente un radical alkylène, tel que éthylène ou propylène,
• n représente un nombre entier de 1 à 3,
+ les acides carboxyliques aliphatiques, linéaires ou ramifiés, ayant de 5 à 10 atomes de carbone,
- et de l'eau,
le rapport pondéral tensio-actif anionique/tensio actif non-ionique est de 10/90 à 90/10, le rapport pondéral cotensio-actif/tensio-actifs anionique et non-ionique est de 0,1 à 1,5, à l'exception des microémulsions comportant à titre de pyréthroïde, 40% de cyperméthrine et contenant à titre de tensio-actif anionique, le phosphate de tristyrylphénol éthoxylé neutralisé à la triéthanolamine de HLB égal à 16, à titre de tensio-actif non ionique, le tristyrylphénol éthoxylé de HLB égal à 12,5 et à titre de cotensio-actif, l'isobutanol, et ne comprenant pas d'alkylbenzène sulfonates de métaux alcalins, alcalino-terreux, d'ammonium, d'alkyl- et/ou cycloalkylammonium ou d'alcanolammonium.

2. Procédé selon la revendication 1, caractérisées en ce que les pyréthroïdes sont des composés actifs insecticides choisis parmi :
- l'alléthrine
- la bifenthrine
- la bioalléthrine
- la bioresméthrine
- la cyfluthrine
- la cyhallothrine
- la cyperméthrine
- la deltaméthrine
- la fenpropathrine
- la perméthrine
- la phénothrine
- les pyréthrines
- la resméthrine
- la téfluthrine
- la tétraméthrine
- la tralométhrine
- le 5-benzy 3-furyl méthyl(E) (1R) cis-2,2-diméthyl 3-(2-oxothiolan 3-ylidène méthyl)cyclopropane carboxylate.

3. Procédé selon l'une des revendications 1 ou 2, caractérisé en ce que les pyréthroïdes mis en oeuvre sont ceux qui sont liquides à température ambiante ou ceux qui peuvent demeurer en surfusion.

4. Procédé selon l'une des revendications 1 à 3, caractérisé en ce que les pyréthroïdes mis en oeuvre sont en solution dans un solvant organique insoluble dans l'eau.

5. Procédé selon la revendication 4, caractérisé en ce que le solvant organique, permettant de conserver les pyréthroïdes à l'état liquide, est choisi parmi les hydrocarbures aromatiques tels que le benzène, le toluène, les xylènes ; les coupes pétrolières aromatiques ; les esters d'alkyle d'acides gras tels que l'oléate de méthyle ; les phtalates de dialkyle tels que le phtalate de di(éthyl-2 hexyle) ; les hydrocarbures chlorés tels que le dichlorométhane, le trichlorométhane, le chloro-1,2 éthane ; les cétones cycliques tels que la cyclopentanone, la cyclohexanone ou l'isophorone.

6. Procédé selon l'une des revendications 4 ou 5, caractérisé en ce que le rapport pondéral solvant organique/pyréthroïde varie de 5/95 à 90/10.

7. Procédé selon l'une des revendications 1 à 6, caractérisé en ce que les tensio-actifs anioniques utilisés sont choisis parmi :
- les monoesters et diesters phosphoriques des di(phényl-1 éthyl)phénols éthoxylés comportant de 2 à 50 motifs oxyéthylène (OE),
- les monoesters et diesters phosphoriques des tri(phényl-1 éthyl)phénols éthoxylés comportant de 2 à 50 motifs OE,
- les monoesters et diesters phosphoriques des di(phényl-1 éthyl)phénols propoxylés comportant de 2 à 50 motifs oxypropylène (OP),
- les monoesters et diesters phosphoriques des tri(phényl-1 éthyl)phénols propoxylés comportant de 2 à 50 motifs OP,
- les monoesters et diesters phosphoriques des di(phényl-1 éthyl phénols éthoxypropoxylés comportant 2 à 50 motifs OE + OP,
- les monoesters et diesters phosphoriques des tri(phényl-1 éthyl)phénols éthoxypropoxylés comportant de 2 à 50 motifs OE + OP,
- les monoesters et diesters sulfuriques de di(phényl-1 éthyl)phénols éthoxylés comportant de 2 à 50 motifs OE,
- les monoesters et diesters sulfuriques de di(phényl-1 éthyl)phénols propoxylés comportant de 2 à 50 motifs OP,
- les monoesters et diesters sulfuriques de di(phényl-1 éthyl)phénols éthoxypropoxylés comportant de 2 à 50 motifs OE + OP,
- les monoesters et diesters sulfuriques de tri(phényl-1 éthyl)phénols éthoxylés comportant de 2 à 50 motifs OE,
- les monoesters et diesters sulfuriques de tri(phényl-1 éthyl)phénols propoxylés comportant de 2 à 50 motifs OP,
- les monoesters et diesters sulfuriques des tri(phényl-1 éthyl)phénols éthoxypropylés comportant de 2 à 50 motifs OE + OP,
dont les éventuelles fonctions acides libres sont neutralisées par des alcanolamines, des cations ammonium, potassium ou sodium.

8. Procédé selon l'une des revendications 1 à 7, caractérisé en ce que les tensio-actifs anioniques utilisés sont choisis parmi :
- les sels de triéthanolamine des monoester et diester phosphoriques du tri(phényl-1 éthyl)phénol éthoxylé avec 16 motifs OE,
- les sels de potassium des monoester et diester phosphoriques du tri(phényl-1 éthyl)phénol éthoxylé avec 16 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl)phénol éthoxylé avec 16 motifs OE,
- le sel d'ammonium du monoester sulfurique du di(phényl-1 éthyl)phénol éthoxylé avec 5 motifs OE,
- le sel d'ammonium du monoester sulfurique du di(phényl-1 éthyl)phénol éthoxylé avec 7 motifs OE,
- le sel d'ammonium du monoester sulfurique du di(phényl-1 éthyl)phénol éthoxylé avec 11 motifs OE.

9. Procédé selon l'une des revendications 1 à 8, caractérisé en ce que les tensio-actifs non-ioniques utilisés sont choisis parmi :
- les di(phényl-1 éthyl)phénols éthoxylés comportant de 2 à 50 motifs OE,
- les di-phényl-1 éthyl)phénols propoxylés comportant de 2 à 50 motifs OP,
- les di(phényl-1 éthyl)phénols éthoxypropoxylés comportant de 2 à 50 motifs OE + OP,
- les tri(phényl-1 éthyl)phénols éthoxylés comportant de 2 à 50 motifs OE,
- les tri(phényl-1 éthyl)phénols propoxylés comportant de 2 à 50 motifs OP,
- les tri(phényl-1 éthyl)phénols éthoxypropoxylés comportant de 2 à 50 motifs OE + OP,
- les nonyl-phénols éthoxypropoxylés comportant de 2 à 100 motifs OE + OP.

10. Procédé selon l'une des revendications 1 à 9, caractérisé en ce que les tensio-actifs non-ioniques utilisés sont choisis parmi :
- les nonyl-phénols éthoxypropoxylés ayant 25 motifs OE + OP,
- les nonyl-phénols éthoxypropoxylés ayant 30 motifs OE + OP,
- les nonyl-phénols éthoxypropoxylés ayant 40 motifs OE + OP,
- les nonyl-phénols éthoxypropoxylés ayant 55 motifs OE + OP,
- les nonyl-phénols éthoxypropoxylés ayant 80 motifs OE + OP,
- les tri(phényl-1 éthyl)phénols éthoxypropoxylés ayant 25 motifs OE + OP,
- le tri(phényl-1 éthyl)phénol éthoxylé ayant 16 motifs OE,
- le tri(phényl-1 éthyl)phénol éthoxylé ayant 20 motifs OE,
- le tri(phényl-1 éthyl)phénol éthoxylé ayant 25 motifs OE,
- le tri(phényl-1 éthyl)phénol éthoxylé ayant 40 motifs OE,
- le di(phényl-1 éthyl)phénol éthoxylé ayant 5 motifs OE.
- le di(phényl-1 éthyl)phénol éthoxylé ayant 11 motifs OE.
- le di(phényl-1 éthyl)phénol éthoxylé ayant 15 motifs OE.

11. Procédé selon l'une des revendications 1 à 10, caractérisé en ce que les cotensio-actifs sont choisis parmi le n-butanol, l'isobutanol(butanol-2), le n-propanol, l'isopropanol(propanol-2), le n-pentanol et ses isomères ramifiés, le n-hexanol et ses isomères ramifiés, le cyclopentanol, le cyclohexanol, les méthyl-cyclohexanols, l'alcool benzylique, l'alcool phényléthylique, le méthoxy-2 éthanol, l'éthoxy-2 éthanol, l'isopropoxy-2 éthanol, le n-butoxy-2 éthanol, le monométhyléther du diéthylène-glycol, le monoéthyléther du diéthylène-glycol, le mono-n-butyléther du diéthylène-glycol, le monoéthyléther du triéthylèneglycol, l'acide heptanoïque et ses isomères ramifiés, l'acide octanoïque et ses isomeres ramifiés, l'acide nonanoïque et ses isomères ramifiés, l'acide décanoïque et ses isomères ramifiés.

12. Procédé selon l'une des revendications 1 à 11, caractérisé en ce qu'elles comportent :
- de 0,1 % à 70 % de leur poids d'au moins un pyréthroïde sous forme liquide,
- de 2 % à 50 % de leur poids d'un système tensio-actif,
comportant au moins un tensio-actif anionique, au moins un tensio-actif non-ionique et au moins un cotensio-actif, dans lequel le rapport pondéral tensio-actif anionique/tensio-actif non-ionique est de 15/85 à 85/15 et le rapport pondéral cotensio-actif/tensio-actifs anionique et non-ionique est de 0,25 à 0,80.

13. Utilisation des microémulsions obtenues selon l'une des revendications 1 à 12, éventuellement après dilution à l'eau lors de leur mise en oeuvre, pour la lutte contre les insectes, notamment dans le traitement des cultures ou la protection du bois.

## Claims (Claims for the following Contracting State(s): AT, BE, CH, DE, DK, FR, GB, IT, LI, LU, NL, PT, SE)

1. Stable pyrethroid microemulsions, characterised in that they comprise:
- from 0.1 % to 95 % by weight of at least one pyrethroid in liquid form,
- from 2 % to 90 % by weight of a surfactant system comprising:
. at least one anionic surfactant chosen from neutral phosphates or sulphates of alkoxylated di(1-phenylethyl)phenols or alkoxylated tri(1-phenylethyl)phenols, alkaline earth metals, ammonium, alkylammonium and/or cycloalkylammonium or alkanolammonium,
. at least one nonionic surfactant chosen from:
+ alkoxylated di(1-phenylethyl)phenols and alkoxylated tri(1-phenylethyl)phenols and
+ ethoxypropoxylated nonylphenols;
. at least one co-surfactant chosen from:
+ straight-chain or branched aliphatic alcohols having from 3 to 10 carbon atoms,
+ cycloaliphatic alcohols having from 5 to 12 carbon atoms,
+ arylaliphatic alcohols having from 7 to 12 carbon atoms,
+ ether-alcohols of formula R-(OR')ₙ-OH in which:
. R represents a straight-chain or branched alkyl radical having from 1 to 8 carbon atoms,
. R' represents an alkylene radical, such as ethylene or propylene, and
. n represents an integer from 1 to 3, and
+ straight-chain or branched aliphatic carboxylic acids having from 5 to 10 carbon atoms,
- and water,
and in that the ratio by weight of anionic surfactant/nonionic surfactant is from 10/90 to 90/10, and the ratio by weight of co-surfactant/anionic and nonionic surfactants is from 0.1 to 1.5, with the exception of microemulsions comprising, as pyrethroid, 40% of cypermethrin and containing, as anionic surfactant, ethoxylated tristyrylphenyl phosphate neutralised with triethanolamine with an HLB equal to 16, as nonionic surfactant, ethoxylated tristyrylphenol with an HLB equal to 12.5 and, as co-surfactant, isobutanol, and not comprising alkylbenzenesulphonates of alkali metals, alkaline earth metals, ammonium, alkylammonium and/or cycloalkylammonium or alkanolammonium.

2. Microemulsions according to claim 1, characterised in that the pyrethroids are insecticidal active compounds chosen from:
- allethrin
- bifenthrin
- bioallethrin
- bioresmethrin
- cyfluthrin
- cyhallothrin
- cypermethrin
- deltamethrin
- fenpropathrin
- permethrin
- phenothrin
- pyrethrins
- resmethrin
- tefluthrin
- tetramethrin
- tralomethrin
- (E)-5-benzyl-3-furylmethyl (1R)-cis-2,2-dimethyl-3-(2-oxothiolan-3-ylidene-methyl)cyclopropanecarboxylate.

3. Microemulsions according to one of claims 1 or 2, characterised in that the pyrethroids used are those which are liquid at ambient temperature or those which may be supercooled.

4. Microemulsions according to one of claims 1 to 3, characterised in that the pyrethroids used are in solution in an organic solvent insoluble in water.

5. Microemulsions according to claim 4, characterised in that the organic solvent, enabling the pyrethroids to be preserved in the liquid state, is chosen from aromatic hydrocarbons, such as benzene, toluene or xylenes; aromatic petroleum cuts; fatty acid alkyl esters, such as methyl oleate; dialkyl phthalates, such as di(2-ethylhexyl) phthalate; chlorinated hydrocarbons, such as dichloromethane, trichloromethane or 1,2-chloroethane; and cyclic ketones, such as cyclopentanone, cyclohexanone or isophorone.

6. Microemulsions according to one of claims 4 or 5, characterised in that the ratio by weight of organic solvent/pyrethroid varies from 5/95 to 90/10.

7. Microemulsions according to one of claims 1 to 6, characterised in that the anionic surfactants used are chosen from:
- phosphoric monoesters and diesters of ethoxylated di(1-phenylethyl)phenols containing from 2 to 50 ethylene oxide (EO) units,
- phosphoric monoesters and diesters of ethoxylated tri(1-phenylethyl)phenols containing from 2 to 50 EO units,
- phosphoric monoesters and diesters of propoxylated di(1-phenylethyl)phenols containing from 2 to 50 propylene oxide (PO) units,
- phosphoric monoesters and diesters of propoxylated tri(1-phenylethyl)phenols containing from 2 to 50 PO units,
- phosphoric monoesters and diesters of ethoxypropoxylated di(1-phenylethyl)phenols containing from 2 to 50 EO + PO units,
- phosphoric monoesters and diesters of ethoxypropoxylated tri(1-phenylethyl)phenols containing from 2 to 50 EO + PO units,
- sulphuric monoesters and diesters of ethoxylated di(1-phenylethyl)phenols containing from 2 to 50 EO units,
- sulphuric monoesters and diesters of propoxylated di(1-phenylethyl)phenols containing from 2 to 50 PO units,
- sulphuric monoesters and diesters of ethoxypropoxylated di(1-phenylethyl)phenols containing from 2 to 50 EO + PO units,
- sulphuric monoesters and diesters of ethoxylated tri(1-phenylethyl)phenols containing from 2 to 50 EO units,
- sulphuric monoesters and diesters of propoxylated tri(1-phenylethyl)phenols containing from 2 to 50 PO units, and
- sulphuric monoesters and diesters of ethoxypropoxylated tri(1-phenylethyl)phenols containing from 2 to 50 EO + PO units,
in which any free acid functions are neutralised by alkanolamines or ammonium, potassium or sodium cations.

8. Microemulsions according to one of claims 1 to 7, characterised in that the anionic surfactants used are chosen from:
- triethanolamine salts of the phosphoric monoester and diester of ethoxylated tri(1-phenylethyl)phenol containing 16 EO units,
- the potassium salts of the phosphoric monoester and diester of ethoxylated tri(1-phenylethyl)phenol containing 16 EO units,
- the potassium salt of the sulphuric monoester of the ethoxylated di(1-phenylethyl)phenol containing 15 EO units,
- the triethanolamine salt of the sulphuric monoester of ethoxylated di(1-phenylethyl)phenol containing 11 EO units,
- the ammonium salt of the sulphuric monoester of ethoxylated tri(1-phenylethyl)phenol containing 16 EO units,
- the ammonium salt of the sulphuric monoester of ethoxylated di(1-phenylethyl)phenol containing 5 EO units,
- the ammonium salt of the sulphuric monoester of ethoxylated di(1-phenylethyl)phenol containing 7 EO units, and
- the ammonium salt of the sulphuric monoester of ethoxylated di(1-phenylethyl)phenol containing 11 EO units.

9. Microemulsions according to one of claims 1 to 8, characterized in that the nonionic surfactants used are chosen from:
- ethoxylated di(1-phenylethyl)phenols containing from 2 to 50 EO units,
- propoxylated di(1-phenylethyl)phenols containing from 2 to 50 PO units,
- ethoxypropoxylated di(1-phenylethyl)phenols containing from 2 to 50 EO + PO units,
- ethoxylated tri(1-phenylethyl)phenols containing from 2 to 50 EO units,
- propoxylated tri(1-phenylethyl)phenols containing from 2 to 50 PO units,
- ethoxypropoxylated tri(1-phenylethyl)phenols containing from 2 to 50 EO + PO units, and
- ethoxypropoxylated nonylphenols containing from 2 to 100 EO + PO units.

10. Microemulsions according to one of claims 1 to 9, characterised in that the nonionic surfactants used are chosen from:
- ethoxypropoxylated nonylphenols having 25 EO + PO units,
- ethoxypropoxylated nonylphenols having 30 EO + PO units,
- ethoxypropoxylated nonylphenols having 40 EO + PO units,
- ethoxypropoxylated nonylphenols having 55 EO + PO units,
- ethoxypropoxylated nonylphenols having 80 EO + PO units,
- ethoxypropoxylated tri(1-phenylethyl)phenols having 25 EO + PO units,
- ethoxylated tri(1-phenylethyl)phenol having 16 EO units,
- ethoxylated tri(1-phenylethyl)phenol having 20 EO units,
- ethoxylated tri(1-phenylethyl)phenol having 25 EO units,
- ethoxylated tri(1-phenylethyl)phenol having 40 EO units,
- ethoxylated di(1-phenylethyl)phenol having 5 EO units,
- ethoxylated di(1-phenylethyl)phenol having 11 EO units, and
- ethoxylated di(1-phenylethyl)phenol having 15 EO units.

11. Microemulsions according to one of claims 1 to 10, characterized in that the co-surfactants are chosen from n-butanol, isobutanol (butan-2-ol), n-propanol, isopropanol (propan-2-ol), n-pentanol and its branched isomers, n-hexanol and its branched isomers, cyclopentanol, cyclohexanol, methylcyclohexanols, benzyl alcohol, phenylethyl alcohol, 2-methoxyethanol, 2-ethoxyethanol, 2-isopropoxyethanol, 2-n-butoxyethanol, diethylene glycol monomethyl ether, diethylene glycol monoethyl ether, diethylene glycol mono-n-butyl ether, triethylene glycol monoethyl ether, heptanoic acid and its branched isomers, octanoic acid and its branched isomers, nonanoic acid and its branched isomers and decanoic acid and its branched isomers.

12. Microemulsions according to one of claims 1 to 11, characterised in that they comprise:
- from 0.1 % to 70 % by weight of at least one pyrethroid in liquid form, and
- from 2 % to 50 % by weight of a surfactant system
comprising at least one anionic surfactant, at least one nonionic surfactant and at least one co-surfactant, in which the ratio by weight of anionic surfactant/nonionic surfactant is from 15/85 to 85/15 and the ratio by weight of co-surfactant/anionic and nonionic surfactants is from 0.25 to 0.80.

13. Use of the microemulsions according to one of claims 1 to 12, if appropriate after dilution with water at the time of their use, for controlling insects, in particular in the treatment of crops or the protection of wood.

## Claims (Claims for the following Contracting State(s): ES, GR)

1. Process for preparing stable pyrethroid microemulsions, characterised in that they are obtained by mixing:
- from 0.1 % to 95 % by weight of at least one pyrethroid in liquid form,
- from 2 % to 90 % by weight of a surfactant system comprising:
. at least one anionic surfactant chosen from neutral phosphates or sulphates of alkoxylated di(1-phenylethyl)phenols or alkoxylated tri(1-phenylethyl)phenols, alkaline earth metals, ammonium, alkylammonium and/or cycloalkylammonium or alkanolammonium,
. at least one nonionic surfactant chosen from:
+ alkoxylated di(1-phenylethyl)phenols and alkoxylated tri(1-phenylethyl)phenols and
+ ethoxypropoxylated nonylphenols;
. at least one co-surfactant chosen from:
+ straight-chain or branched aliphatic alcohols having from 3 to 10 carbon atoms,
+ cycloaliphatic alcohols having from 5 to 12 carbon atoms,
+ arylaliphatic alcohols having from 7 to 12 carbon atoms,
+ ether-alcohols of formula R-(OR')ₙ-OH in which:
. R represents a straight-chain or branched alkyl radical having from 1 to 8 carbon atoms,
. R' represents an alkylene radical, such as ethylene or propylene, and
. n represents an integer from 1 to 3, and
+ straight-chain or branched aliphatic carboxylic acids having from 5 to 10 carbon atoms,
- and water,
the ratio by weight of anionic surfactant/nonionic surfactant being from 10/90 to 90/10,
and the ratio by weight of co-surfactant/anionic and nonionic surfactants being from 0.1 to 1.5, with the exception of microemulsions comprising, as pyrethroid, 40% of cypermethrin and containing, as anionic surfactant, ethoxylated tristyrylphenyl phosphate neutralized with triethanolamine with an HLB equal to 16, as nonionic surfactant, ethoxylated tristyrylphenol with an HLB equal to 12.5 and, as co-surfactant, isobutanol, and not comprising alkylbenzenesulphonates of alkali metals, alkaline earth metals, ammonium, alkylammonium and/or cycloalkylammonium or alkanolammonium.

2. Process according to claim 1, characterised in that the pyrethroids are insecticidal active compounds chosen from:
- allethrin
- bifenthrin
- bioallethrin
- bioresmethrin
- cyfluthrin
- cyhallothrin
- cypermethrin
- deltamethrin
- fenpropathrin
- permethrin
- phenothrin
- pyrethrins
- resmethrin
- tefluthrin
- tetramethrin
- tralomethrin
- (E)-5-benzyl-3-furylmethyl (1R)-cis-2,2-dimethyl-3-(2-oxothiolan-3-ylidene-methyl)cyclopropanecarboxylate.

3. Process according to one of claims 1 or 2, characterised in that the pyrethroids used are those which are liquid at ambient temperature or those which may be supercooled.

4. Process according to one of claims 1 to 3, characterised in that the pyrethroids used are in solution in an organic solvent insoluble in water.

5. Process according to claim 4, characterised in that the organic solvent, enabling the pyrethroids to be preserved in the liquid state, is chosen from aromatic hydrocarbons, such as benzene, toluene or xylenes; aromatic petroleum cuts; fatty acid alkyl esters, such as methyl oleate; dialkyl phthalates, such as di(2-ethylhexyl) phthalate; chlorinated hydrocarbons, such as dichloromethane, trichloromethane or 1,2-chloroethane; and cyclic ketones, such as cyclopentanone, cyclohexanone or isophorone.

6. Process according to one of claims 4 or 5, characterised in that the ratio by weight of organic solvent/pyrethroid varies from 5/95 to 90/10.

7. Process according to one of claims 1 to 6, characterised in that the anionic surfactants used are chosen from:
- phosphoric monoesters and diesters of ethoxylated di(1-phenylethyl)phenols containing from 2 to 50 ethylene oxide (EO) units,
- phosphoric monoesters and diesters of ethoxylated tri(1-phenylethyl)phenols containing from 2 to 50 EO units,
- phosphoric monoesters and diesters of propoxylated di(1-phenylethyl)phenols containing from 2 to 50 propylene oxide (PO) units,
- phosphoric monoesters and diesters of propoxylated tri(1-phenylethyl)phenols containing from 2 to 50 PO units,
- phosphoric monoesters and diesters of ethoxypropoxylated di(1-phenylethyl)phenols containing from 2 to 50 EO + PO units,
- phosphoric monoesters and diesters of ethoxypropoxylated tri(1-phenylethyl)phenols containing from 2 to 50 EO + PO units,
- sulphuric monoesters and diesters of ethoxylated di(1-phenylethyl)phenols containing from 2 to 50 EO units,
- sulphuric monoesters and diesters of propoxylated di(1-phenylethyl)phenols containing from 2 to 50 PO units,
- sulphuric monoesters and diesters of ethoxypropoxylated di(1-phenylethyl)phenols containing from 2 to 50 EO + PO units,
- sulphuric monoesters and diesters of ethoxylated tri(1-phenylethyl)phenols containing from 2 to 50 EO units,
- sulphuric monoesters and diesters of propoxylated tri(1-phenylethyl)phenols containing from 2 to 50 PO units, and
- sulphuric monoesters and diesters of ethoxypropoxylated tri(1-phenylethyl)phenols containing from 2 to 50 EO + PO units,
in which any free acid functions are neutralised by alkanolamines or ammonium, potassium or sodium cations.

8. Process according to one of claims 1 to 7, characterised in that the anionic surfactants used are chosen from:
- triethanolamine salts of the phosphoric monoester and diester of ethoxylated tri(1-phenylethyl)phenol containing 16 EO units,
- the potassium salts of the phosphoric monoester and diester of ethoxylated tri(1-phenylethyl)phenol containing 16 EO units,
- the potassium salt of the sulphuric monoester of the ethoxylated di(1-phenylethyl)phenol containing 15 EO units,
- the triethanolamine salt of the sulphuric monoester of ethoxylated di(1-phenylethyl)phenol containing 11 EO units,
- the ammonium salt of the sulphuric monoester of ethoxylated tri(1-phenylethyl)phenol containing 16 EO units,
- the ammonium salt of the sulphuric monoester of ethoxylated di(1-phenylethyl)phenol containing 5 EO units,
- the ammonium salt of the sulphuric monoester of ethoxylated di(1-phenylethyl)phenol containing 7 EO units, and
- the ammonium salt of the sulphuric monoester of ethoxylated di(1-phenylethyl)phenol containing 11 EO units.

9. Process according to one of claims 1 to 8, characterised in that the nonionic surfactants used are chosen from:
- ethoxylated di(1-phenylethyl)phenols containing from 2 to 50 EO units,
- propoxylated di(1-phenylethyl)phenols containing from 2 to 50 PO units,
- ethoxypropoxylated di(1-phenylethyl)phenols containing from 2 to 50 EO + PO units,
- ethoxylated tri(1-phenylethyl)phenols containing from 2 to 50 EO units,
- propoxylated tri(1-phenylethyl)phenols containing from 2 to 50 PO units,
- ethoxypropoxylated tri(1-phenylethyl)phenols containing from 2 to 50 EO + PO units, and
- ethoxypropoxylated nonylphenols containing from 2 to 100 EO + PO units.

10. Process according to one of claims 1 to 9, characterised in that the nonionic surfactants used are chosen from:
- ethoxypropoxylated nonylphenols having 25 EO + PO units,
- ethoxypropoxylated nonylphenols having 30 EO + PO units,
- ethoxypropoxylated nonylphenols having 40 EO + PO units,
- ethoxypropoxylated nonylphenols having 55 EO + PO units,
- ethoxypropoxylated nonylphenols having 80 EO + PO units,
- ethoxypropoxylated tri(1-phenylethyl)phenols having 25 EO + PO units,
- ethoxylated tri(1-phenylethyl)phenol having 16 EO units,
- ethoxylated tri(1-phenylethyl)phenol having 20 EO units,
- ethoxylated tri(1-phenylethyl)phenol having 25 EO units,
- ethoxylated tri(1-phenylethyl)phenol having 40 EO units,
- ethoxylated di(1-phenylethyl)phenol having 5 EO units,
- ethoxylated di(1-phenylethyl)phenol having 11 EO units, and
- ethoxylated di(1-phenylethyl)phenol having 15 EO units.

11. Process according to one of claims 1 to 10, characterised in that the co-surfactants are chosen from n-butanol, isobutanol (butan-2-ol), n-propanol, isopropanol (propan-2-ol), n-pentanol and its branched isomers, n-hexanol and its branched isomers, cyclopentanol, cyclohexanol, methylcyclohexanols, benzyl alcohol, phenylethyl alcohol, 2-methoxyethanol, 2-ethoxyethanol, 2-isopropoxyethanol, 2-n-butoxyethanol, diethylene glycol monomethyl ether, diethylene glycol monoethyl ether, diethylene glycol mono-n-butyl ether, triethylene glycol monoethyl ether, heptanoic acid and its branched isomers, octanoic acid and its branched isomers, nonanoic acid and its branched isomers and decanoic acid and its branched isomers.

12. Process according to one of claims 1 to 11, characterised in that they comprise:
- from 0.1 % to 70 % by weight of at least one pyrethroid in liquid form, and
- from 2 % to 50 % by weight of a surfactant system
comprising at least one anionic surfactant, at least one nonionic surfactant and at least one co-surfactant, in which the ratio by weight of anionic surfactant/nonionic surfactant is from 15/85 to 85/15 and the ratio by weight of co-surfactant/anionic and nonionic surfactants is from 0.25 to 0.80.

13. Use of the microemulsions obtained according to one of claims 1 to 12, if appropriate after dilution with water at the time of their use, for controlling insects, in particular in the treatment of crops or the protection of wood.

## Patentansprüche (Patentansprüche für folgende(n) Vertragsstaat(en): AT, BE, CH, DE, DK, FR, GB, IT, LI, LU, NL, PT, SE)

1. Stabile Pyrethroidmikroemulsionen, dadurch gekennzeichnet, daß sie
- 0,1 Gew.-% bis 95 Gew.-% mindestens eines Pyrethroids in flüssiger Form,
- 2 Gew.-% bis 90 Gew.-% eines oberflächenaktiven Systems (Tensidsystems), enthaltend:
• mindestens ein anionisches Tensid, ausgewählt aus Phosphaten oder neutralen Sulfaten von alkoxylierten Di-(1-phenylethyl)phenolen oder von alkoxylierten Tri-(1-phenylethyl)phenolen, von Erdalkalimetallen, von Ammonium, von Alkyl- und/oder Cycloalkylammonium oder von Alkanolammonium,
• mindestens ein nichtionisches Tensid, ausgewählt, aus:
* alkoxylierten Di-(1-phenylethyl)phenolen und alkoxylierten Tri-(1-phenyl)phenolen,
* ethoxypropoxylierten Nonylphenolen;
• mindestens ein Cotensid, ausgewählt aus:
* linearen oder verzweigten aliphatischen Alkoholen mit 3 bis 10 Kohlenstoffatomen,
* cycloaliphatischen Alkoholen mit 5 bis 12 Kohlenstoffatomen,
* arylaliphatischen Alkoholen mit 7 bis 12 Kohlenstoffatomen,
* Etheralkoholen der Formel R-(OR')ₙ-OH, in der:
R einen linearen oder verzweigten Alkylrest mit 1 bis 8 Kohlenstoffatomen darstellt,
R' einen Alkylenrest wie Ethylen oder Propylen darstellt und
n eine ganze Zahl von 1 bis 3 darstellt,
* linearen oder verzweigten aliphatischen Carbonsäuren mit 5 bis 10 Kohlenstoffatomen,
- und Wasser
enthalten und daß das Gewichtsverhältnis von anionischem Tensid/nichtionischem Tensid 10/90 bis 90/10 beträgt und das Gewichtsverhältnis von Cotensid/anionischem und nichtionischem Tensid 0,1 bis 1,5 beträgt, ausgenommen Mikroemulsionen, die als Pyrethroid 40 % Cypermethrin enthalten und als anionisches Tensid ethoxyliertes Tristyrylphenolphosphat, neutralisiert mit Triethanolamin, mit einem HLB-Wert von 16 enthalten, als nichtionisches Tensid ethoxyliertes Tristyrylphenol mit einem HLB-wert von 12,5 enthalten und als Cotensid Isobutanol enthalten und die keine Alkalimetall-, Erdalkalimetall-, Ammonium-, Alkyl- und/oder Cycloalkylammonium- oder Alkanolammoniumalkylbenzolsulfonate enthalten.

2. Mikroemulsionen nach Anspruch 1, dadurch gekennzeichnet, daß die Pyrethroide aktive Insektizidverbindungen sind, die ausgewählt sind aus:
- Allethrin,
- Bifenthrin,
- Bioallethrin,
- Bioresmethrin,
- Cyfluthrin,
- Cyhallothrin,
- Cypermethrin,
- Deltamethrin,
- Fenpropathrin,
- Permethrin,
- Phenothrin,
- Pyrethrinen,
- Resmethrin,
- Tefluthrin,
- Tetramethrin,
- Tralomethrin und
- 5-Benzyl-3-furylmethyl-(E)-(1R)-cis-2,2-dimethyl-3-(2-oxothiolan-3-ylidenmethyl)-cyclopropancarboxylat.

3. Mikroemulsionen nach Anspruch 1 oder 2, dadurch gekennzeichnet, daß die eingesetzten Pyrethroide solche sind, die bei Umgebungstemperatur flüssig sind, oder solche, die in Unterkühlung verbleiben können.

4. Mikroemulsionen nach einem der Ansprüche 1 bis 3, dadurch gekennzeichnet, daß sich die eingesetzten Pyrethroide in Lösung in einem organischen Lösungsmittel, das in Wasser unlöslich ist, befinden.

5. Mikroemulsionen nach Anspruch 4, dadurch gekennzeichnet, daß das organische Lösungsmittel, das die Pyrethroide im flüssigen Zustand beizubehalten ermöglicht, ausgewählt ist aus aromatischen Kohlenwasserstoffen wie Benzol, Toluol und den Xylolen; aromatischen Kohlenwasserstofffraktionen; Fettsäurealkylestern wie Methyloleat; Dialkylphthalaten wie Di-(2-ethylhexyl)phthalat; chlorierten Kohlenwasserstoffen wie Dichlormethan, Trichlormethan, 1,2-Dichlorethan; ringförmigen Ketonen wie Cyclopentanon, Cyclohexanon oder Isophoron.

6. Mikroemulsionen nach Anspruch 4 oder 5, dadurch gekennzeichnet, daß das Gewichtsverhältnis von organischem Lösemittel/Pyrethroid von 5/95 bis 90/10 variiert.

7. Mikroemulsionen nach einem der Ansprüche 1 bis 6, dadurch gekennzeichnet, daß die verwendeten anionischen Tenside ausgewählt sind aus:
- Phosphorsäuremonoestern und -diestern von ethoxylierten Di-(1-phenylethyl)phenolen mit 2 bis 50 Einheiten Oxyethylen (OE),
- Phosphorsäuremonoestern und diestern von ethoxylierten Tri-(1-phenylethyl)phenolen mit 2 bis 50 Einheiten OE,
- Phosphorsäuremonoestern und -diestern von propoxylierten Di-(1-phenylethyl)phenolen mit 2 bis 50 Einheiten Oxypropylen (OP),
- Phosphorsäuremonoestern und -diestern von propoxylierten Tri-(1-phenylethyl)phenolen mit 2 bis 50 Einheiten OP,
- Phosphorsäuremonoestern und -diestern von ethoxypropoxylierten Di-(1-phenylethyl)phenolen und 2 bis 50 Einheiten OE + OP,
- Phosphorsäuremonoestern und -diestern von ethoxypropoxylierten Tri-(1-phenylethyl)phenolen mit 2 bis 50 Einheiten OE + OP,
- Schwefelsäuremonoestern und -diestern von ethoxylierten Di(1-phenylethyl)phenolen mit 2 bis 50 Einheiten OE,
- Schwefelsäuremonoestern und -diestern von propoxylierten Di-(1-phenylethyl)phenolen mit 2 bis 50 Einheiten OP,
- Schwefelsäuremonoestern und -diestern von ethoxypropoxylierten Di-(1-phenylethyl)phenolen mit 2 bis 50 Einheiten OE + OP,
- Schwefelsäuremonoestern und -diestern von ethoxylierten Tri-(1-phenylethyl)phenolen mit 2 bis 50 Einheiten OE,
- Schwefelsäuremonoestern und -diestern von propoxylierten Tri-(1-phenylethyl)phenolen mit 2 bis 50 Einheiten OP,
- Schwefelsäuremonoestern und -diestern von ethoxypropoxylierten Tri-(1-phenylethyl)phenolen mit 2 bis 50 Einheiten OE + OP,
wobei die gegebenenfalls vorhandenen, freien Säurefunktionen durch Alkanolamine oder Ammonium-, Kalium- oder Natriumkationen neutralisiert sind.

8. Mikroemulsionen nach einem der Ansprüche 1 bis 7, dadurch gekennzeichnet, daß die verwendeten anionischen Tenside ausgewählt sind aus;
- Triethanolaminsalzen von Phosphorsäuremonoestern und -diestern des ethoxylierten Tri-(1-phenylethyl)phenols mit 16 Einheiten OE,
- Kaliumsalzen von Phosphorsäuremonoestern und -diestern des ethoxylierten Tri-(1-phenylethyl)phenols mit 16 Einheiten OE,
- dem Kaliumsalz des Schwefelsäuremonoesters des ethoxylierten Di-(1-phenylethyl)phenols mit 15 Einheiten OE,
- dem Triethanolaminsalz des Schwefelsäuremonoesters des ethoxylierten Di-(1-phenylethyl)phenols mit 11 Einheiten OE,
- dem Ammoniumsalz des Schwefelsäuremonoesters des ethoxylierten Tri-(1-phenylethyl)phenols mit 16 Einheiten OE,
- dem Ammoniumsalz des Schwefelsäuremonoesters des ethoxylierten Di-(1-phenylethyl)phenols mit 5 Einheiten OE,
- dem Ammoniumsalz des Schwefelsäuremonoesters des ethoxylierten Di-(1-phenylethyl)phenols mit 7 Einheiten OE,
- dem Ammoniumsalz des Schwefelsäuremonoesters des ethoxylierten Di-(1-phenylethyl)phenols mit 11 Einheiten OE.

9. Mikroemulsionen nach einem der Ansprüche 1 bis 8, dadurch gekennzeichnet, daß die verwendeten nichtionischen Tenside ausgewählt sind aus:
- ethoxylierten Di-(1-phenylethyl)phenolen mit 2 bis 50 Einheiten OE,
- propoxylierten Di-(1-phenylethyl)phenolen mit 2 bis 50 Einheiten OP,
- ethoxypropoxylierten Di-(1-phenylethyl)phenolen mit 2 bis 50 Einheiten OE + OP,
- ethoxylierten Tri-(1-phenylethyl)phenolen mit 2 bis 50 Einheiten OE,
- propoxylierten Tri-(1-phenylethyl)phenolen mit 2 bis 50 Einheiten OP,
- ethoxypropoxylierten Tri-(1-phenylethyl)phenolen mit 2 bis 50 Einheiten OE + OP,
- ethoxypropoxylierten Nonylphenolen mit 2 bis 100 Einheiten OE + OP.

10. Mikroemulsionen nach einem der Ansprüche 1 bis 9, dadurch gekennzeichnet, daß die verwendeten nichtionischen Tenside ausgewählt sind aus:
- ethoxypropoxylierten Nonylphenolen mit 25 Einheiten OE + OP,
- ethoxypropoxylierten Nonylphenolen mit 30 Einheiten OE + OP,
- ethoxypropoxylierten Nonylphenolen mit 40 Einheiten OE + OP,
- ethoxypropoxylierten Nonylphenolen mit 55 Einheiten OE + OP,
- ethoxypropoxylierten Nonylphenolen mit 80 Einheiten OE + OP,
- ethoxypropoxylierten Tri-(1-phenylethyl)phenolen mit 25 Einheiten OE + OP,
- ethoxyliertem Tri-(1-phenylethyl)phenol mit 16 Einheiten OE,
- ethoxyliertem Tri-(1-phenylethyl)phenol mit 20 Einheiten OE,
- ethoxyliertem Tri-(1-phenylethyl)phenol mit 25 Einheiten OE,
- ethoxyliertem Tri-(1-phenylethyl)phenol mit 40 Einheiten OE,
- ethoxyliertem Di-(1-phenylethyl)phenol mit 5 Einheiten OE,
- ethoxyliertem Di-(1-phenylethyl)phenol mit 11 Einheiten OE,
- ethoxyliertem Di-(1-phenylethyl)phenol mit 15 Einheiten OE.

11. Mikroemulsionen nach einem der Ansprüche 1 bis 10, dadurch gekennzeichnet, daß die Cotenside ausgewählt sind aus n-Butanol, Isobutanol (2-Butanol), n-Propanol, Isopropanol (2-Propanol), n-Pentanol und seinen verzweigten Isomeren, n-Hexanol und seinen verzweigten Isomeren, Cyclopentanol, Cyclohexanol, den Methylcyclohexanolen, Benzylalkohol, Phenylethylalkohol, 2-Methoxyethanol, 2-Ethoxyethanol, 2-Isopropoxyethanol, 2-n-Butoxyethanol, Diethylenglykolmonomethylether, Diethylenglykolmonoethylether, Diethylenglykolmono-n-butylether, Triethylenglykolmonoethylether, Heptansäure und ihren verzweigten Isomeren, Octansäure und ihren verzweigten Isomeren, Nonansäure und ihren verzweigten Isomeren und Dekansäure und ihren verzweigten Isomeren.

12. Mikroemulsionen nach einem der Ansprüche 1 bis 11, dadurch gekennzeichnet, daß sie enthalten:
- 0,1 % bis 70 % ihres Gewichts mindestens eines Pyrethroids in flüssiger Form,
- 2 % bis 50 % ihres Gewichts eines Tensidsystems, enthaltend mindestens ein anionisches Tensid, mindestens ein nichtionisches Tensid und mindestens ein Cotensid, wobei das Gewichtsverhältnis von anionischem Tensid/nichtionischem Tensid 15/85 bis 85/15 beträgt und das Gewichtsverhältnis von Cotensid/anionischem und nichtionischem Tensid 0,25 bis 0,80 beträgt.

13. Verwendung der Mikroemulsionen nach einem der Ansprüche 1 bis 12, gegebenenfalls nach Verdünnung in Wasser bei ihrer Verwendung, für den Einsatz gegen Insekten, insbesondere zur Behandlung von Kulturen und Pflanzenzüchtungen oder zum Schutz von Holz.

## Patentansprüche (Patentansprüche für folgende(n) Vertragsstaat(en): ES, GR)

1. Verfahren zur Herstellung von stabilen Pyrothroidmikroemulsionen, dadurch gekennzeichnet, daß sie erhalten werden durch Mischung von:
- 0,1 Gew.-% bis 95 Gew.-% mindestens eines Pyrethroids in flüssiger Form,
- 2 Gew.-% bis 90 Gew.-% eines Tensidsystems, enthaltend:
• mindestens ein anionisches Tensid, ausgewählt aus Phosphaten oder neutralen Sulfaten von alkoxylierten Di-(1-phenylethyl)phenolen oder von alkoxylierten Tri-(1-phenylethyl)phenolen, von Erdalkalimetallen, von Ammonium, von Alkyl- und/oder Cycloalkylammonium oder von Alkanolammonium,
• mindestens ein nichtionisches Tensid, ausgewählt aus:
* alkoxylierten Di-(1-phenylethyl)phenolen und alkoxylierten Tri-(1-phenylethyl)phenolen,
* ethoxypropoxylierten Nonylphenolen;
• mindestens ein Cotensid, ausgewählt aus:
* linearen oder verzweigten aliphatischen Alkoholen mit 3 bis 10 Kohlenstoffatomen,
* cycloaliphatischen Alkoholen mit 5 bis 12 Kohlenstoffatomen,
* arylaliphatischen Alkoholen mit 7 bis 12 Kohlenstoffatomen,
* Etheralkohole der Formel R-(OR')ₙ-OH in der:
R einen linearen oder verzweigten Alkylrest mit 1 bis 8 Kohlenstoffatomen darstellt,
R' einen Alkylenrest wie Ethylen oder Propylen darstellt und
n eine ganze Zahl von 1 bis 3 darstellt,
* linearen oder verzweigten aliphatischen Carbonsäuren mit 5 bis 10 Kohlenstoffatomen,
- und Wasser,
wobei das Gewichtsverhältnis von anionischem Tensid/nichtionischem Tensid 10/90 bis 90/10 beträgt und das Gewichtsverhältnis von Cotensid/anionischem und nichtionischem Tensid 0,1 bis 1,5 beträgt, ausgenommen Mikroemulsionen, die als Pyrethroid 40 % Cypermethrin enthalten und die als anionisches Tensid ethoxyliertes Tristyrylphenolphosphat, neutralisiert mit Triethanolamin, mit einem HLB-Wert von 16 enthalten, als nichtionisches Tensid ethoxyliertes Tristyrylphenol mit einem HLB-Wert von 12,5 enthalten und als Cotensid Isobutanol enthalten und die keine Alkalimetall-, Erdalkalimetall-, Ammonium-, Alkyl- und/oder Cycloalkylammonium- oder Alkanolammoniumalkylsulfonate enthalten.

2. Verfahren nach Anspruch 1, dadurch gekennzeichnet, daß die Pyrethroide aktive Insektizidverbindungen sind, die ausgewählt sind aus:
- Allethrin,
- Bifenthrin,
- Bioallethrin,
- Bioresmethrin,
- Cyfluthrin,
- Cyhallothrin,
- Cypermethrin,
- Deltamethrin,
- Fenpropathrin,
- Permethrin,
- Phenothrin,
- Pyrethrinen,
- Resmethrin,
- Tefluthrin,
- Tetramethrin,
- Tralomethrin und
- 5-Benzyl-3-furylmethyl-(E)-(1R)-cis-2,2-dimethyl-3-(2-oxothiolan-3-ylidenmethyl)-cyclopropancarboxylat.

3. Verfahren nach Anspruch 1 oder 2, dadurch gekennzeichnet, daß die eingesetzten Pyrethroide solche sind, die bei Umgebungstemperatur flüssig sind, oder solche, die in Unterkühlung verbleiben können.

4. Verfahren nach einem der Ansprüche 1 bis 3, dadurch gekennzeichnet, daß sich die eingesetzten Pyrethroide in Lösung in einem organischen, in Wasser unlöslichen Lösungsmittel befinden.

5. Verfahren nach Anspruch 4, dadurch gekennzeichnet, daß das organische Lösungsmittel, das die Pyrethroide im flüssigen Zustand beizubehalten ermöglicht, ausgewählt ist aus aromatischen Kohlenwasserstoffen wie Benzol, Toluol und den Xylolen; aromatischen Kohlenwasserstofffraktionen; Fettsäurealkylestern wie Methyloleat; Dialkylphthalaten wie Di-(2-ethylhexyl)phthalat; chlorierten Kohlenwasserstoffen wie Dichlormethan, Trichlormethan, 1,2-Dichlorethan; ringförmigen Ketonen wie Cyclopentanon, Cyclohexanon oder Isophoron.

6. Verfahren nach Anspruch 4 oder 5, dadurch gekennzeichnet, daß das Gewichtsverhältnis von organischem Lösemittel/Pyrethroid von 5/95 bis 90/10 variiert.

7. Verfahren nach einem der Ansprüche 1 bis 6, dadurch gekennzeichnet, daß die verwendeten anionischen Tenside ausgewählt sind:
- Phosphorsäuremonoestern und -diestern von ethoxylierten Di-(1-phenylethyl)phenolen mit 2 bis 50 Einheiten Oxyethylen (OE),
- Phosphorsäuremonoestern und -diestern von ethoxylierten Tri-(1-phenylethyl)phenolen mit 2 bis 50 Einheiten OE,
- Phosphorsäuremonoestern und -diestern von propoxylierten Di-(1-phenylethyl)phenolen mit 2 bis 50 Einheiten Oxypropylen (OP),
- Phosphorsäuremonoestern und -diestern von propoxylierten Tri-(1-phenylethyl)phenolen mit 2 bis 50 Einheiten OP,
- Phosphorsäuremonoestern und -diestern von ethoxypropoxylierten Di-(1-phenylethyl)phenolen und 2 bis 50 Einheiten OE + OP,
- Phosphorsäuremonoestern und -diestern von ethoxypropoxylierten Tri-(1-phenylethyl)phenolen mit 2 bis 50 Einheiten OE + OP,
- Schwefelsäuremonoestern und -diestern von ethoxylierten Di-(1-phenylethyl)phenolen mit 2 bis 50 Einheiten OE,
- Schwefelsäuremonoestern und -diestern von propoxylierten Di-(1-phenylethyl)phenolen mit 2 bis 50 Einheiten OP,
- Schwefelsäuremonoestern und -diestern von ethoxypropoxylierten Di-(1-phenylethyl)phenolen mit 2 bis 50 Einheiten OE + OP,
- Schwefelsäuremonoestern und -diestern von ethoxylierten Tri-(1-phenylethyl)phenolen mit 2 bis 50 Einheiten OE,
- Schwefelsäuremonoestern und -diestern von propoxylierten Tri-(1-phenylethyl)phenolen mit 2 bis 50 Einheiten OP,
- Schwefelsäuremonoestern und -diestern von ethoxypropoxylierten Tri-(1-phenylethyl)phenolen mit 2 bis 50 Einheiten OE + OP,
wobei die gegebenenfalls vorhandenen, freien Säurefunktionen durch Alkanolamine oder Ammonium-, Kalium- oder Natriumkationen neutralisiert werden.

8. Verfahren nach einem der Ansprüche 1 bis 7, dadurch gekennzeichnet, daß die verwendeten anionischen Tenside ausgewählt sind aus:
- Triethanolaminsalzen von Phosphorsäuremonoestern und -diestern des ethoxylierten Tri-(1-phenylethyl)phenols mit 16 Einheiten OE,
- Kaliumsalzen der Phosphorsäuremonoestern und -diestern des ethoxylierten Tri-(1-phenylethyl)phenols mit 16 Einheiten OE,
- dem Kaliumsalz des Schwefelsäuremonoesters des ethoxylierten Di-(1-phenylethyl)phenols mit 15 Einheiten OE,
- dem Triethanolaminsalz, des Schwefelsäuremonoesters des ethoxylierten Di-(1-phenylethyl)phenols mit 11 Einheiten OE,
- dem Ammoniumsalz des Schwefelsäuremonoesters des ethoxylierten Tri-(1-phenylethyl)phenols mit 16 Einheiten OE,
- dem Ammoniumsalz des Schwefelsäuremonoesters des ethoxylierten Di-(1-phenylethyl)phenols mit 5 Einheiten OE,
- dem Ammoniumsalz des Schwefelsäuremonoesters des ethoxylierten Di-(1-phenylethyl)phenols mit 7 Einheiten OE,
- dem Ammoniumsalz des Schwefelsäuremonoesters des ethoxylierten Di-(1-phenylethyl)phenols mit 11 Einheiten OE.

9. Verfahren nach einem der Ansprüche 1 bis 8, dadurch gekennzeichnet, daß die verwendeten nichtionischen Tenside ausgewählt sind aus:
- ethoxylierten Di-(1-phenylethyl)phenolen mit 2 bis 50 Einheiten OE,
- propoxylierten Di-(1-phenylethyl)phenolen mit 2 bis 50 Einheiten OP,
- ethoxypropoxylierten Di-(1-phenylethyl)phenolen mit 2 bis 50 Einheiten OE + OP,
- ethoxylierten Tri-(1-phenylethyl)phenolen mit 2 bis 50 Einheiten OE,
- propoxylierten Tri-(1-phenylethyl)phenolen mit 2 bis 50 Einheiten OP,
- ethoxypropoxylierten Tri-(1-phenylethyl)phenolen mit 2 bis 50 Einheiten OE + OP,
- ethoxypropoxylierten Nonylphenolen mit 2 bis 100 Einheiten OE + OP.

10. Verfahren nach einem der Ansprüche 1 bis 9, dadurch gekennzeichnet, daß die verwendeten nichtionischen Tenside ausgewählt sind aus:
- ethoxypropoxylierten Nonylphenolen mit 25 Einheiten OE + OP,
- ethoxypropoxylierten Nonylphenolen mit 30 Einheiten OE + OP,
- ethoxypropoxylierten Nonylphenolen mit 40 Einheiten OE + OP,
- ethoxypropoxylierten Nonylphenolen mit 55 Einheiten OE + OP,
- ethoxypropoxylierten Nonylphenolen mit 80 Einheiten OE + OP,
- ethoxypropoxylierten Tri-(1-phenylethyl)phenolen mit 25 Einheiten OE + OP,
- ethoxyliertem Tri-(1-phenylethyl)phenol mit 16 Einheiten OE,
- ethoxyliertem Tri-(1-phenylethyl)phenol mit 20 Einheiten OE,
- ethoxyliertem Tri-(1-phenylethyl)phenol mit 25 Einheiten OE,
- ethoxyliertem Tri-(1-phenylethyl)phenol mit 40 Einheiten OE,
- ethoxyliertem Di-(1-phenylethyl)phenol mit 5 Einheiten OE,
- ethoxyliertem Di-(1-phenylethyl)phenol mit 11 Einheiten OE,
- ethoxyliertem Di-(1-phenylethyl)phenol mit 15 Einheiten OE.

11. Verfahren nach einem der Ansprüche 1 bis 10, dadurch gekennzeichnet, daß die Cotenside ausgewählt sind aus n-Butanol, Isobutanol (2-Butanol), n-Propanol, Isopropanol (2-Propanol), n-Pentanol und seinen verzweigten Isomeren, n-Hexanol und seinen verzweigten Isomeren, Cyclopentanol, Cyclohexanol, den Methylcyclohexanolen, Benzylalkohol, Phenylethylalkohol, 2-Methoxyethanol, 2-Ethoxyethanol, 2-Isopropoxyethanol, 2-n-Butoxyethanol, Diethylenglykolmonomethylether, Diethylenglykolmonoethylether, Diethylenglykolmono-n-butylether, Triethylengykolmonoethylether, Heptansäure und ihren verzweigten Isomeren, Octansäure und ihren verzweigten Isomeren, Nonansäure und ihren verzweigten Isomeren und Dekansäure und ihren verzweigten Isomeren.

12. Verfahren nach einem der Ansprüche 1 bis 11, dadurch gekennzeichnet, daß sie enthalten:
- 0,1 % bis 70 % ihres Gewichts mindestens eines Pyrethroids in flüssiger Form,
- 2 % bis 50 % ihres Gewichts eines Tensidsystems, enthaltend mindestens ein anionisches Tensid, mindestens ein nichtionisches Tensid und mindestens ein Cotensid, wobei das Gewichtsverhältnis von anionischem Tensid/nicthtionischem Tensid 15/85 bis 85/15 beträgt und das Gewichtsverhältnis von Cotensid/anionischem und nichtionischem Tensid 0,25 bis 0,80 beträgt.

13. Verwendung der Mikroemulsionen, die nach einem der Ansprüche 1 bis 12 erhalten sind, gegebenenfalls nach Verdünnung in Wasser bei ihrer Verwendung, zur Bekämpfung von Insekten, insbesondere bei der Behandlung von Kulturen und Pflanzenzüchtungen oder zum Schutz von Holz.
